Europäisches Patentamt

European Patent Office

Office européen des brevets

(11) Veröffentlichungsnummer: **0 149 711**
**A2**

(12) **EUROPÄISCHE PATENTANMELDUNG**

(21) Anmeldenummer: **84109733.0**

(22) Anmeldetag: **16.08.84**

(51) Int. Cl.⁴: **G 09 G 1/28**
**H 04 N 9/72, H 04 N 9/73**
**G 09 G 1/16**

(30) Priorität: **10.12.83 DE 3344747**

(43) Veröffentlichungstag der Anmeldung:
**31.07.85  Patentblatt 85/31**

(84) Benannte Vertragsstaaten:
**AT DE FR GB IT**

(71) Anmelder: **Blaupunkt-Werke GmbH**
**Robert-Bosch-Strasse 200**
**D-3200 Hildesheim(DE)**

(72) Erfinder: **Hinkel, Lukas, Dipl.-Ing.**
**Meerbrink 10**
**D-3204 Nordstemmen 4(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) Schaltungsanordnung zur automatischen Einstellung der Schwarzwertspannung.

(57) Für die sogenannte Cut-Off-Automatik sind bei Fernsehgeräten preisgünstige integrierte Schaltungen als Regelschaltungen bekannt, die sowohl das Videosignal für die
Ansteuerung der Kathoden der Bildröhre verarbeiten als
auch die Cut-Off-Spannung erzeugen.

Um die bekannten preisgünstigen IC's auch bei hochauflösenden Datensichtgeräten benutzen zu können, um auch
dort die Vorteile einer Cut-Off-Automatik zu erhalten, ist
extern zu der bekannten Regelschaltung ein gesonderter
breitbandiger Videosignalweg vorgesehen, über welchen die
Videosignale kapazitiv zu den Kathoden geführt sind. Der
gesonderte Videosignalweg übernimmt also die Verarbeitung der Videosignale, so daß der Videosignalweg der
bekannten Regelschaltung in dieser Hinsicht ungenutzt
bleibt, während die eigentliche Cut-Off-Automatik der
bekannten Regelschaltung nach wie vor in vorteilhafter
Weise zur Eliminierung der Temperaturabhängigkeit und der
Einflüsse der Alterungserscheinungen der Kathoden ausgenutzt wird.

0149711

Schaltungsanordnung zur automatischen
Einstellung der Schwarzwertspannung

Die Erfindung betrifft eine Schaltungsanordnung zur automatischen Einstellung der Spannung für den Schwarzwert
der Kathode(n) (Cut-off-Spannung) bei Bildröhren für hochauflösende Datensichtgeräte unter Verwendung einer an sich
bekannten Regelschaltung mit einem Videosignalweg für die
Videosignale und mit einer Logikschaltung und Automatikschaltung zur Erzeugung einer Referenzspannung mittels
einer vorbestimmten Anzahl von Horizontalimpulsen.

Schaltungsanordnungen dieser Gattung werden bekanntlich
beim Betrieb von Bildröhren (Kathodenstrahlröhren) in Fernsehgeräten benötigt, um gleichbleibende Helligkeitswerte
auf dem Schirm der Bildröhre erzeugen zu können. Die für
die Erzeugung eines Elektronenstrahls vorgesehene Kathode
arbeitet nämlich temperaturabhängig, so daß ohne eine Regelschaltung entsprechende Helligkeitsschwankungen in Abhängigkeit von der Kathodentemperatur auftreten.

Auch die Farbtemperatur der Bildröhre bei Farbfernsehgeräten unterliegt störenden Schwankungen. Ferner sind
noch die nachteiligen Einflüsse zu berücksichtigen, die
durch Alterung der Kathode (bzw. der Kathoden bei Dreistrahl-Bildröhren mit je einer Kathode für R = Rot, B = Blau und G = Grün) hervorgerufen werden.

In der Praxis machen sich die Einflüsse der Temperaturabhängigkeit der Helligkeit und der Farbtemperatur sowie der Alterungserscheinungen z.B. dadurch bemerkbar, daß sich *ein weiß abgeglichenes Bild* grünlich, bläulich oder rötlich verfärbt.

Die zur Vermeidung der beschriebenen störenden Einflüsse bei Fernsehgeräten verwendeten Regelschaltungen - die übrigens durchweg als integrierte Schaltungen (IC) ausgeführt sind - besitzen sowohl einen Videosignalweg mit einem Videoverstärker als auch die eigentliche Automatikschaltung zur automatischen Einstellung der sogenannten Cut-off-Spannung. Unter dem letzten Begriff ist diejenige Kathodenspannung zu verstehen, bei welcher bei Bildschwarz der Strahlstrom gerade zu fließen beginnt (Signalpegel unterhalb von Schwarz werden also "abgeschnitten", daher der Ausdruck "Cut-off").

Bei den bekannten Regelschaltungen mit Cut-off-Automatik, wie sie z.B. durch den IC "TDA 3300 (Motorola)" bekanntgeworden sind, wird im Anschluß an die Vertikalaustastung während 3 Zeilen ein Referenzpegel bzw. eine Referenzspannung auf die Ausgänge für R, G und B geschaltet, wobei der Referenzpegel über die Verstärkung eines Videoverstärkers eine Kathodenspannung von z.B. 150 V ergibt. Der
Strahlstrom der Bildröhre wird mittels eines Spannungsabfalls an einem Widerstand gemessen. Durch Vergleich dieses
Spannungsabfalls mit einer internen Referenzspannung kann
dann das Kathodenpotential der Bildröhre eingestellt werden.

Ist z.B. der gemessene Spannungsabfall zu gering (der
Strahlstrom also zu klein) wird ein Klemmkondensator entladen, wodurch der Pegel einer Ausgangsspannung steigt,
so daß das Kathodenpotential der Bildröhre sinkt und der
Strahlstrom somit zunimmt, bis der Gleichgewichtszustand
erreicht ist. Es handelt sich hier also um eine Sample-
und Hold-Schaltung in einem geschlossenen Regelkreis. Die
Funktion der bekannten Regelschaltung besteht also darin,
die Kathodenspannung in Abhängigkeit der Einflußgrößen so
zu verstellen, daß der Strahlstrom immer den richtigen Wert
besitzt (damit ein korrekter Weißabgleich möglich ist) und
der Strom immer konstant gehalten werden kann, indem entsprechend den störenden Einflüssen die Kathodenspannung geändert wird.

Neben der Automatik- und Logikschaltung für die Cut-off-
Automatik umfaßt die bekannte Regelschaltung auch noch einen
Videosignalweg für die der bzw. den Kathoden zugeführten Signale für die Ansteuerung. Dieser Videosignalweg ist nun bei

R.Nr. 1798

den bekannten Regelschaltungen relativ schmalbandig mit einer Bandbreite von etwa bis zu 7 MHz ausgelegt, was für die üblichen Fernsehgeräte auch völlig ausreichend ist.

Die voranstehend erläuterte Notwendigkeit einer Cut-off-Automatik stellt sich allerdings nicht nur bei den üblichen Fernsehgeräten, vielmehr ist die gleiche Problematik (Temperaturabhängigkeit und Alterserscheinungen der Kathoden) auch bei Datensichtgeräten anzutreffen, bei denen im Unterschied zu den Fernsehgeräten auf dem Bildschirm vorwiegend Daten (Zahlen, Tabellen usw.) dargestellt werden. In der Praxis kann man feststellen, daß bei solchen hochauflösenden Datensichtgeräten - bei denen wegen der geforderten hohen Auflösung für die Darstellung der Daten eine entsprechend höhere Bandbreite für den Videosignalweg erforderlich ist - bisher auf eine Cut-off-Automatik verzichtet worden ist. Dies mag unter Umständen darauf zurückzuführen sein, daß die Datensichtgeräte üblicherweise nach dem Einschalten eine relativ lange Zeitdauer in Betrieb bleiben, und daß nach einer gewissen anfänglichen Betriebsdauer eine Stabilisierung der Kathodentemperatur eintritt. Die störenden Einflüsse der Temperaturabhängigkeit werden daher mit zunehmender Betriebsdauer des eingeschalteten Datensichtgerätes immer geringer.

Innerhalb der ersten Zeitdauer nach dem Einschalten eines Datensichtgerätes macht sich die Temperaturabhängigkeit der Kathode bzw. der Kathoden allerdings in der eingangs beschriebenen nachteiligen Weise bemerkbar. Wenn auch nach einer gewissen Betriebsdauer sich hier eine gewisse Stabilisierung einstellt, so bleibt dennoch der Nachteil bestehen, daß die Alterserscheinungen der Kathode ebenfalls zu den eingangs beschriebenen störenden Einflüssen führen. Daher stellt sich auch bei den hochauflösenden Datensichtgeräten das Problem der Beseitigung der störenden Einflüsse, wenngleich diese bisher bei den bekannten Datensichtgeräten auch immer noch hingenommen worden sind.

Man könnte nun zwar daran denken, die bei den bekannten Fernsehgeräten für die Cut-off-Automatik vorgesehenen Regelschaltungen, die wegen der benötigten hohen Stückzahlen sehr preiswert sind, auch bei den hochauflösenden Datensichtgeräten einzusetzen. Allerdings muß eine solche Anwendung der bekannten Regelschaltungen daran scheitern, daß bei den hochauflösenden Datensichtgeräten für den Videosignalweg eine erheblich über der zur Verfügung stehenden Bandbreite von etwa 7 MHz liegende Bandbreite benötigt wird, die z.B. 30 MHz betragen kann. Somit lassen sich die bekannten preisgünstigen Regelschaltungen bei hochauflösenden Datensichtgeräten nicht einsetzen.

Der Erfindung liegt die Aufgabe zugrunde, die Vorteile der bekannten Regelschaltungen auch bei hochauflösenden Datensichtgeräten ausnutzen zu können, um auch dort die durch die Temperaturabhängigkeit und durch die Alterserscheinungen der Kathode hervorgerufenen nachteiligen Einflüsse zu eliminieren.

Zur Lösung dieser Aufgabe ist bei der im Oberbegriff des Anspruchs 1 vorausgesetzten Schaltungsanordnung erfindungsgemäß vorgesehen, daß ein extern zur Regelschaltung verlaufender gesonderter breitbandiger Videosignalweg vorgesehen ist, über den die Videosignale kapazitiv zur Kathode geführt sind, und daß die Cut-off-Spannung mittels der Logikschaltung und Automatikschaltung in Verbindung mit einer Klemmschaltung festgelegt ist.

Der Erfindung liegt der Gedanke zugrunde, die auf dem Markt befindlichen preisgünstigen Regelschaltungen auch bei hochauflösenden Datensichtgeräten zu verwenden. Der entscheidende Schritt besteht nun darin, extern zu der bekannten Regelschaltung einen breitbandigen Videosignalweg zu schaffen, so daß der in den bekannten Regelschaltungen vorhandene schmalbandige Videosignalweg ungenutzt bleibt. Allerdings werden die anderen Schaltungsteile der bekannten Regelschaltung nach wie vor für die Cut-off-Automatik ausgenutzt; lediglich der Videosignalweg verläuft getrennt von der Regelschaltung, wobei dieser separate Videosignalweg entsprechend den verwendeten Datensichtgeräten ausreichend
breitbandig ausgelegt werden kann.

Die Erfindung gestattet es somit, die Vorteile der bekannten Regelschaltung für die Cut-off-Automatik auch bei
hochauflösenden Datensichtgeräten unter Verwendung der
preisgünstigen bekannten Regelschaltungen auszunutzen.
Da der Videosignalweg mit einem breitbandigen Videoverstärker getrennt von der bekannten Regelschaltung verläuft, ist eine kapazitive Ankoppelung in dem Signalweg vorgesehen, und außerdem besitzt die erfindungsgemäße Schaltungsanordnung auch noch eine in diesem Fall erforderliche Klemmschaltung.

Es wird demnach konsequent die Regelungsmöglichkeit der bekannten Regelschaltung auch bei hochauflösenden Datensichtgeräten ausgenutzt, während der Videosignalweg getrennt von
dieser Regelschaltung verläuft. Damit ist es erstmals auch
bei diesen hochauflösenden Datensichtgeräten mit einfachen
und preisgünstigen Mitteln möglich, die Vorteile einer Cut-
off-Automatik auszunutzen.

Es wurde schon erwähnt, daß bei der bekannten Regelschaltung die Horizontalimpulse für die Cut-off-Automatik herangezogen werden, wobei jeweils eine ganz bestimmte Anzahl von Horizontalimpulsen benötigt wird. Deshalb besitzt die bekannte Regelschaltung einen Zähler, der die vorbestimmte Anzahl von Horizontalimpulsen zählt.

Eine zweckmäßige Ausgestaltung der Erfindung sieht nun vor, daß der bekannten Regelschaltung ein Zähler vorgeschaltet ist, der lediglich eine bestimmte Anzahl von Horizontalimpulsen zählt und zur Regelschaltung durchläßt, die derjenigen Anzahl von Horizontalimpulsen entspricht, die in der Logikschaltung der bekannten Regelschaltung gezählt werden.

Durch den vorgeschalteten Zähler wird verhindert, daß über die vorbestimmte Anzahl hinausgehende Horizontalimpulse zur bekannten Regelschaltung gelangen können, was bei der Erfindung unerwünscht ist, wie nachfolgend noch näher erläutert wird.

Andere vorteilhafte Ausgestaltungen und Weiterbildungen der Erfindung sind in den Unteransprüchen angegeben und der Zeichnung zu entnehmen.

Nachfolgend wird die Erfindung anhand des in der Zeichnung dargestellten Ausführungsbeispiels näher erläutert. Es zeigen:

Fig. 1          ein Prinzip-Blockschaltbild der bekannten Regelschaltung,


Fig. 2          ein Prinzipschaltbild einer Schaltungsanordnung bei einem hochauflösenden Datensichtgerät, und


Fig. 3          mehrere Signalkurven zur Erläuterung der Schaltungsanordnung gemäß Fig. 2.


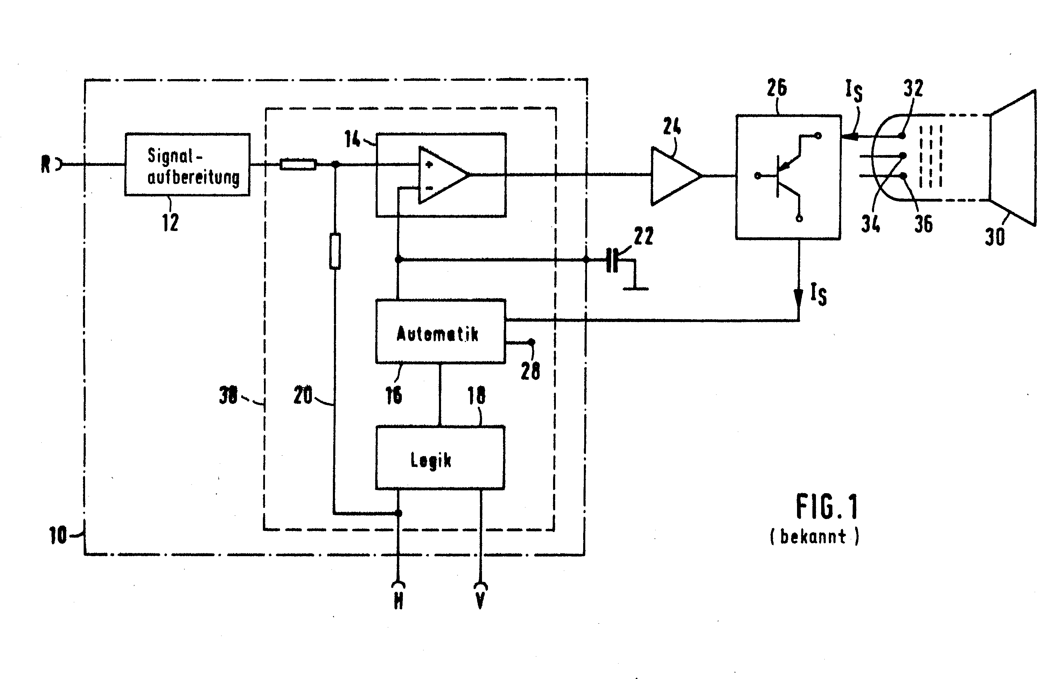

Zum besseren Verständnis der Erfindung wird nachfolgend anhand von Fig. 1 zunächst zunächst die prizipielle Wirkungsweise einer bekannten Regelschaltung 10 erläutert, wie sie
bei Fernsehgeräten eingesetzt wird, wo für den Videosignalweg eine relativ geringe Bandbreite von etwa 7 MHz ausreichend ist.


Die Beschreibung bezieht sich auf Farb-Fernsehgeräte, d.h.,
es werden Bildröhren mit drei Kathoden 32, 34 und 36 für
R,G und B vorausgesetzt. Aus Gründen der Übersichtlichkeit
der Zeichnungen ist allerdings jeweils nur der Signalweg
für den Rotkanal (R) dargestellt.


Bei der in Fig. 1 gezeigten z.B. durch den IC TDA 3300 (Motorola) bekannten Regelschaltung werden über einen Videosignaleingang R für die Rot-Signale die entsprechenden
Videosignale einer Signalaufbereitungsschaltung 12 und
einem Videoverstärker 14 zugeführt, und von dort gelangen
die Videosignale über einen Verstärker 24 und einen Meßtransistor 26 zur Kathode 32 einer Bildröhre 30. Dabei
ist der Videosignalweg in Form der Signalaufbereitungsschaltung 12 und des Verstärkers 24 relativ schmalbandig mit
einer Bandbreite von etwa 7 MHz ausgelegt.

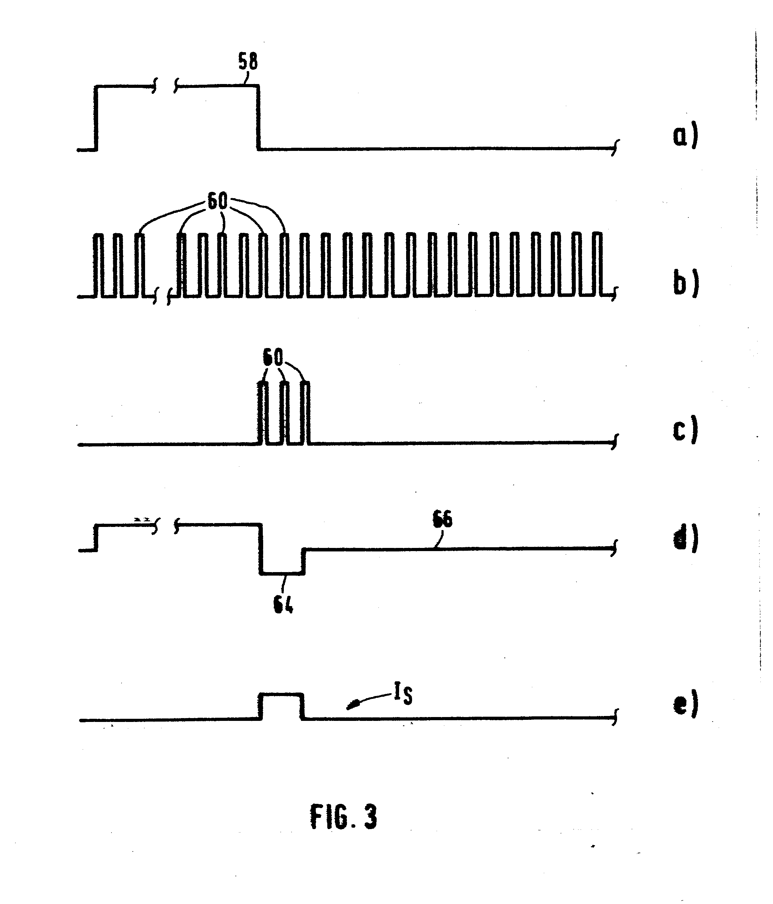

Der Regelschaltung 10 werden über einen Horizontalimpulseingang H und einen Vertikalimpulseingang V die Horizontal-
und Vertiklaimpulse des nicht dargestellten Fernsehgerätes
zugeführt. In einer Logikschaltung 18, die in Verbindung
mit der eigentlichen Automatikschaltung 16 steht, werden
zeitlich unmittelbar im Anschluß an den Vertikalimpuls 58
(vgl. Fig. 3) 3 Horizontalimpulse 60 gezählt. Es gelangen
also nur drei Horizontalimpulse 60 zur Automatikschaltung
16. Über eine Verbindungsleitung 20 werden demgegenüber alle
Horizontalimpulse 60 dem Videoverstärker 14 zugeführt.

Die Automatikschaltung 16 besitzt eine Klemme 28, an welcher
ein Sollwert bzw. eine Referenzspannung anliegt. Außerdem
ist die Verbindung der Automatikschaltung 16 mit dem Videoverstärker 14 über einen Kondensator 22 an Masse geschaltet.

Bei der bekannten Regelschaltung 10 wird unter Zuhilfenahme

0149711
R.Nr. 1798

des Meßtransistors 26 der Strahlstrom $I_S$ über den Spannungsabfall an einem Widerstand gemessen, und der gemessene Spannungswert wird mit einer internen Referenz verglichen, um
den erforderlichen neuen Strahlstrom $I_S$ einzustellen.

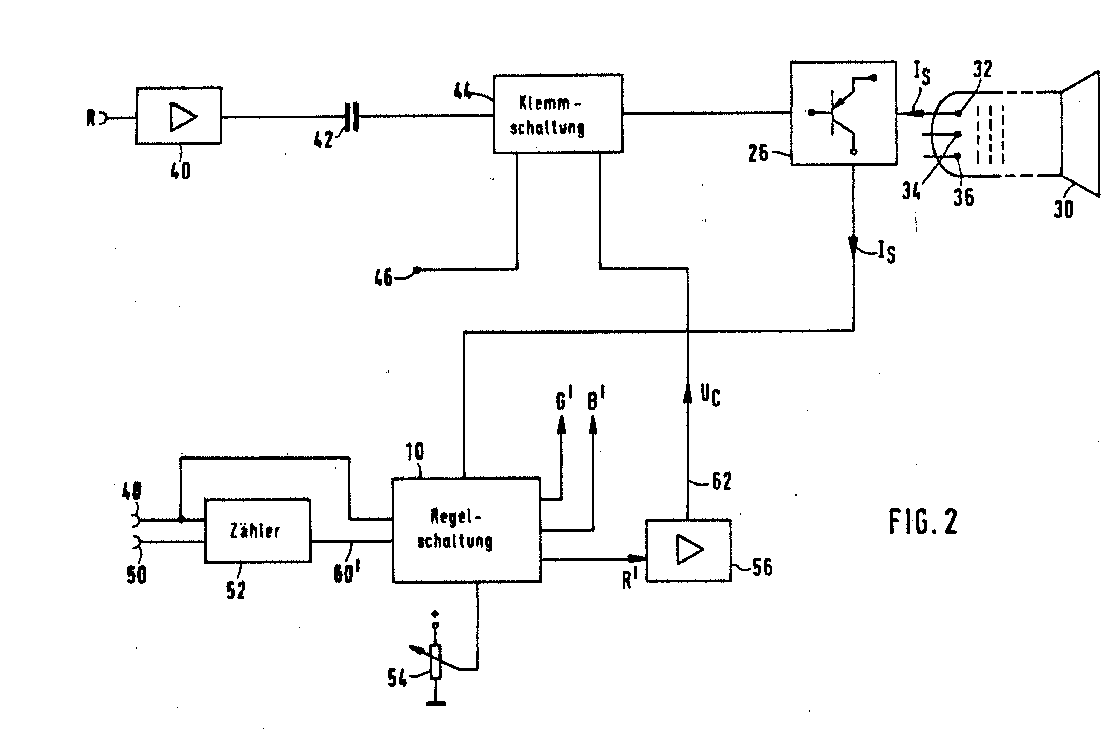

Bei dem Ausführungsbeispiel der Erfindung gemäß Fig. 2
wird für die Anwendung bei hochauflösenden Datensichtgeräten mit einer Bildröhre 30 die bekannte Regelschaltung
10 hinsichtlich des Aspektes der Cut-off-Automatik ausgenutzt, während der eigentliche Videosignalweg getrennt und
extern von der Regelschaltung 10 verläuft.

Über den Videosignaleingang R für das Rotsignal gelangen
die entsprechenden Videosignale nämlich - getrennt von der
Regelschaltung 10 - zu einem breitbandigen Videoverstärker
40, dessen Bandbreite etwa 30 MHz beträgt. An den Videoverstärker 40 schließt sich ein Koppelkondensator 42 an, der
mit einer Klemmschaltung 44 verbunden ist. Von dort führt
der Signalweg über den Meßtransistor 26 zur Kathode 32 für
das Rot-Signal der Bildröhre 30.

Über eine Vertikalimpulseingangsklemme 48 und eine Horizontalimpulseingangsklemme 50 gelangen die Vertikalimpulse 58
und die Horizontalimpulse 60 zu einem Zähler 52, dessen die
Horizontalimpulse 60 zählender Ausgang über eine Leitung 60'
mit der bekannten Regelschaltung 10 verbunden ist. Dabei führt die Leitung 60' zu dem in Fig. 1 gezeigten Horizontalimpulseingang H. Außerdem gelangen die Vertikalimpulse 58 an der Vertikalimpulseingangsklemme 48 unter Umgehung des Zählers 52 noch direkt zu dem in Fig. 1 gezeigten Vertikalimpulseingang V der Regelschaltung 10. Letztere ist noch mit einem an eine positive Spannung angeschlossenen Helligkeitsregler 54 zur manuellen Regulierung der Helligkeit verbunden.

Die Regelschaltung 10 besitzt unter anderem 3 Ausgänge R', B' und G', wobei im vorliegenden Fall - wie schon bei Fig. 1 - nur der Signalweg für das Rot-Signal betrachtet wird. Der Ausgang R' der Regelschaltung 10 führt zu einem Verstärker 56, für den eine Bandbreite von etwa 1 MHz ausreichend ist. Die mittels der Regelschaltung 10 erzeugte und in dem Verstärker 56 verstärkte Cut-off-Spannung $U_C$ gelangt über eine Leitung 62 zur Klemmschaltung 44, der außerdem über eine Eingangsklemme 46 noch Horizontalimpulse 58 zugeführt werden.

Anhand von Fig. 1 wurde schon beschrieben, daß in der Logikschaltung 18 zwar nur eine vorbestimmte Anzahl - hier 3 - von Horizontalimpulsen 60 gezählt wird, daß über die Verbindungsleitung 20 gleichwohl aber alle Horizontalimpulse 60 zum Videoverstärker 14 gelangen. Dies ist bei der Erfindung, bei welcher der Videosignalweg getrennt von der Regelschaltung 10 verläuft - nicht erwünscht. Andererseits soll aber gleichwohl die bekannte Regelschaltung 10, die zumeist als IC vorliegt, benutzt werden. Da es nicht möglich ist, innerhalb der integrierten Regelschaltung 10 die Verbindungsleitung 20 zu unterbrechen, ist der Regelschaltung 10 der Zähler 52 vorgeschaltet, welcher intern so verdrahtet ist, daß er jeweils nur 3 Horizontalimpulse 60 zählt. Daher gelangen über die Leitung 60' also auch nur jeweils 3 Horizontalimpulse zur Regelschaltung 10, so daß die nach wie vor bestehende Verbindungsleitung 20 nicht mehr stört. In der Logikschaltung 18 werden diese 3 Horizontalimpulse 60 dann nochmals gezählt.

Durch die gestrichelt gezeichnete Linie 38 in Fig. 1 ist angedeutet, welcher Schaltungsteil der bekannten Regelungsschaltung bei der erfindungsgemäßen Schaltungsanordnung für die Cut-off-Automatik mit ausgenutzt wird, wobei die Verbindungsleitung 20 wegen des voranstehend erläuterten Zählers 52 nicht mehr störend ist.

Unter Bezugnahme auf die Diagramme in Fig. 3 wird nachfolgend die Wirkung der erfindungsgemäßen Schaltungsanordnung - soweit sie die eigentliche Cut-off-Automatik betrifft - näher erläutert, wobei anzumerken ist, daß der innerhalb der gestrichelten Linie 20 befindliche Verstärker 14 bei der Erfindung lediglich für den Gleichspannungspegel, und nicht für das Videosignal, ausgenutzt wird.

In Fig. 3a - c ist dargestellt, daß der Regelschaltung 10 in Fig. 2 durch den vorgeschalteten Zähler 52 nach dem Vertikalimpuls 58 (Dunkeltastimpuls) eine bestimmte Anzahl - hier 3 - von Horizontalimpulsen 60 zugeführt wird. Der Zähler 52 zählt also nur 3 Horizontalimpulse 60, die über die Leitung 60' zur Regelschaltung 10 gelangen.

Durch die Logikschaltung 18 und der Automatikschaltung 16 (vgl. Fig. 1) wird nach dem Vertikalimpuls 58, d.h. nach dem vertikalen Bildrücklauf, ein definierter Referenzpegel 64 (Fig. 3d) während z.B. 3 Zeilen erzeugt. In dieser Zeit wird der Kathodenstrom $I_S$ der Bildröhre 30 von der Automatikschaltung 16 gemessen. Bei Abweichungen vom Sollwert wird die Kathodenspannung derart verschoben, daß der Sollwert des Kathodenstromes wieder erreicht wird. Durch eine Verschiebung des Schwarzwertes 66 (Fig. 3d) relativ zum Referenzpegel 64 läßt sich die Helligkeit auf dem Schirm der Bildröhre 30 einstellen.

Abweichend von den bisher bekannten Regelschaltungen wird bei der Erfindung die Kathodenspannung der Bildröhre 30 durch die Klemmschaltung 44 auf die Cut-off-Spannung $U_C$ ge- klemmt (vgl. Schwarzwert bzw. Cut-off-Spannung 66 in Fig. 3d). Zur Messung des Kathodenstromes $I_S$ der Bildröhre 30 ist in an sich bekannter Weise der Meßtransistor 26 vorgesehen.

Bei der Erfindung wird also die Spannung für den Schwarzwert 66 der Kathode 32 über die Cut-off-Automatik 16 und
über die Klemmschaltung 44 definiert, während das Videosignal über den getrennten breitbandigen Videoverstärker 40
kapazitiv eingespeist wird.

P a t e n t a n s p r ü c h e
=====================================

1.      Schaltungsanordnung zur automatischen Einstellung
der Spannung für den Schwarzwert der Kathode(n) (Cut-off-
Spannung) bei Bildröhren für hochauflösende Datensichtgeräte
unter Verwendung einer an sich bekannten Regelschaltung mit
einem Videosignalweg für die Videosignale und mit einer
Logikschaltung und Automatikschaltung zur Erzeugung einer
Referenzspannung mittels einer vorbestimmten Anzahl von
Horizontalimpulsen, dadurch gekennzeichnet, daß ein extern
zur Regelschaltung (10) verlaufender gesonderter breitbandiger
Videosignalweg (40) vorgesehen ist, über den die Videosignale
kapazitiv zur Kathode (32) geführt sind, und daß die Cut-off-
Spannung $(U_C)$ mittels der Logikschaltung (18) und Automatikschaltung (16) in Verbindung mit einer Klemmschaltung (44)
festgelegt ist.

2.      Schaltungsanordnung nach Anspruch 1, dadurch gekennzeichnet, daß der Regelschaltung (10) ein von Horizontal
(60)- und Vertikalimpulsen (58) angesteuerter Zähler (52) vorgeschaltet ist, welcher die Horizontalimpulse (60) zählt.

3.      Schaltungsanordnung nach Anspruch 2, dadurch gekennzeichnet, daß die Zählung der Horizontalimpulse (60)
durch den Zähler (52) nach dem Vertikalimpuls (58) beginnt.

4.      Schaltungsanordnung nach Anspruch 3, dadurch gekennzeichnet, daß der Zähler (52) nach dem Vertikalimpuls
(58) eine vorbestimmte Anzahl von Horizontalimpulsen (60)
zählt, die gleich der Anzahl der Horizontalimpulse ist, die
in der Logikschaltung (18) der Regelschaltung (10) gezählt
werden.

5.      Schaltungsanordnung nach Anspruch 1, dadurch gekennzeichnet, daß der Videosignalweg einen Videoverstärker (40) umfaßt, dessen Bandbreite etwa 30 MHz beträgt.

FIG.1
( bekannt )

1/3

0149711

FIG. 2

FIG. 3